# EUROPEAN PATENT APPLICATION

(11) **EP 3 244 352 A1**
(43) Date of publication of application: **15.11.2017**
(21) Application number: 16169596.0
(22) Date of filing: 13.05.2016
(51) Int. Cl.: G06Q 10/00

(54) **A LABEL DEVICE FOR PRESENTING INFORMATION RELATED TO A TRANSPORTABLE COLLECTION OF MATERIALS**

(71) Applicant: Siemens Aktiengesellschaft, 80333 München (DE)
(72) Inventor: Hartmann, Norman, 80469 München (DE)

(57) **Abstract**

The invention proposes a label device for presenting information related to a transportable collection of materials. The label device includes a wireless interface for trans-ceiving data regarding a state and/or a location of said collection of materials. The wireless interface is configured for receiving data corresponding to information to be displayed by the label device. The label device further includes a control unit for defining said information to be displayed and a display for displaying this information. Information displayed by the label device can be arbitrarily defined and amended at any time. Containers identified by label devices can be placed freely in a shelf since they report their position as needed. The invention offers the ability to personalize labels to particular operators, i.e. show what an operator actually needs to know now and not only information of a generic kind. A particular advantage arises by using the invention in industrial or manufacturing logistics. The display may advantageously indicate good or bad states, especially for shock detection. The display presentation of label devices according to the embodiments may advantageously indicate an incident by which the temperature has exceeded predefined thresholds.

## Description

A label device for presenting information related to a transportable collection of materials

The present invention relates generally to the field of digital label devices for materials and products.

In the past, labels have served as static indicators for conveying label information that is fixed in time. Such conventional labels cannot present information which may change over time, or user-specific information.

In recent times, label devices have evolved. Grocery shelf label devices are capable of presenting visual information on a display such as an LCD or liquid crystal display. Thus, visual information on such label devices, such as price information for grocery products, may be defined and altered in a remote and nonintrusive manner.

In the field of industrial production, logistics within a production facility are needed to introduce a categorization system in order to identify materials, tools and other components needed to perform the work.

Production materials are usually stored in containers, the contents of which are identified by labels. These containers enclose any number of identical or mixed items - or, in other words: a transportable collection of materials - depending on the task at hand. A container may contain a large number of generic materials, e.g. screws, or a specific number of items used for the production of a single customer order.

A large number of today's production facilities use conventional labels in printed form identifying contents of such containers. In many cases, production staff is searching for an appropriate container needed for a specific task, thereby losing precious time.

In order to ease the process of assuming responsibility over a container, printed labels featuring a barcode are known. Production staff wishing to work with these containers needs to follow certain placement/storage logic in order to remember the contents of a box. Quite often, staff needs to rescan the barcode or re-read the label to verify they are using the correct container. This procedure is time-consuming and prone to errors.

Accordingly, there is a need in the art for a label device which is capable of adapting the displayed contents according to situations in an industrial environment.

Systems and methods in accordance with various embodiments of the invention provide for means for presenting information related to a transportable collection of materials.

According to the invention, a label device for presenting information related to a transportable collection of materials is proposed. The label device includes a wireless interface for transceiving - i.e. transmitting and receiving sequentially or simultaneously - data regarding a state and/or a location of said collection of materials. The wireless interface is further configured for receiving data corresponding to information to be displayed by the label device. The label device further includes a control unit for defining said information to be displayed and a display for displaying this information.

A major advantage of the invention lies in the ability to adapt the displayed contents to the needs of a specific operator in displaying particular information relevant for a specific task at a specific time.

According to an embodiment the display includes a first pixel-addressable display area. This first display area preferably comprises electronic ink disposed on a support. Electronic ink displays provide advantageously low energy consumption.

According to an embodiment the display includes a second display area for displaying an attention level. An attention level includes a priority, an urgency level, a workflow information, a warning, an assignment to a specific operator, etc. imposed on the collection of materials to which the sensor is assigned to. The attention level may be emphasized by a certain color, blinking etc. Advantageously, the label may blink or illuminate in order to indicate an appropriate container in a work flow to an operator. An attention level assigned to a priority may change for the case that the collection of materials has not been handled for a certain period in time which may be indicated by a constant red light of the second display area which turns into a blinking red light after a definable time period. An assignment to a specific operator may include a specific color for a specific operator. A »handling« of the collection of materials may be a movement of the container for the collection of materials or scanning a barcode displayed on the first display area. This embodiment ensures that certain materials have an attention of operators within definable time distances, e.g. every day. Further on, the attention level may be implemented by an indication of a so-called »digital mold« which indicates a definable period of not handling the materials by flashing a green light in a double cycle, followed by a triple cycle and so on.

Preferably, the first display area is surrounded by the second display area in a frame-shaped manner in order to emphasize the contents of the first display area by a colored and/or blinking frame.

According to an embodiment the label device includes at least one sensor for determining spatial coordinates of the label device.

According to an embodiment the label device includes at least one sensor for determining a tampering or removal of the label device.

According to an embodiment the label device includes at least one sensor for determining environment parameters such a temperature, a humidity and/or an acceleration.

According to an embodiment the information to be displayed includes at least one optical machine-readable code such as a barcode or a matrix code.

According to an embodiment an arrangement is proposed which includes a container for accommodating the collection of materials, a supporting element on a surface of the container for retaining at least one label device and a sensor device assigned to the supporting element for determining data regarding a tampering or removal of the label device. The sensor device is adapted for transceiving said data by a wireless interface of the sensor device to attached label device or to any remote device.

According to an embodiment an arrangement is proposed which includes at least one label device, at least one portable device for acquiring the information to be displayed by the label device and at least one remote device for transceiving data with the portable device and the label device. The remote device or server is preferably arranged for amending the data regarding the state and/or the location of the label device upon acquiring said information by the portable device. In an embodiment the label device is connected to a backend server that provides various management functionalities such as checking a status of registered label devices, identifying their location, converting data - e.g. web based data like HTML (Hypertext Markup Language) or CSS (Cascading Style Sheets) - formats into a pictorial display contents of the label device and/or updating the contents and attention level or status of display areas, e.g. flashing frame in green color.

The portable device may include or consist of an optical reader for reading the information displayed by the display or, alternatively or additionally, may include a near field communication transceiver for transceiving information with the wireless interface of the label device.

For a better understanding of the embodiments described herein and to show more clearly how it may be carried into effect, reference will now be made to the accompanying drawings which show at least one exemplary embodiment in which:
- FIG. 1:: is a functional block diagram of an exemplary label device;
- FIG. 2:: is a front view of an exemplary label device;
- FIG. 3:: is a schematic drawing of a mechanical fastening arrangement according to an embodiment; and;
- FIG. 4:: is a schematic drawing of a mechanical fastening arrangement according to an alternative embodiment.

The accompanying drawings are included to provide a further understanding of the present invention and are incorporated in and constitute a part of this specification. The elements of the drawings are not necessarily drawn to scale relative to each other. Like reference numerals designate corresponding similar parts.

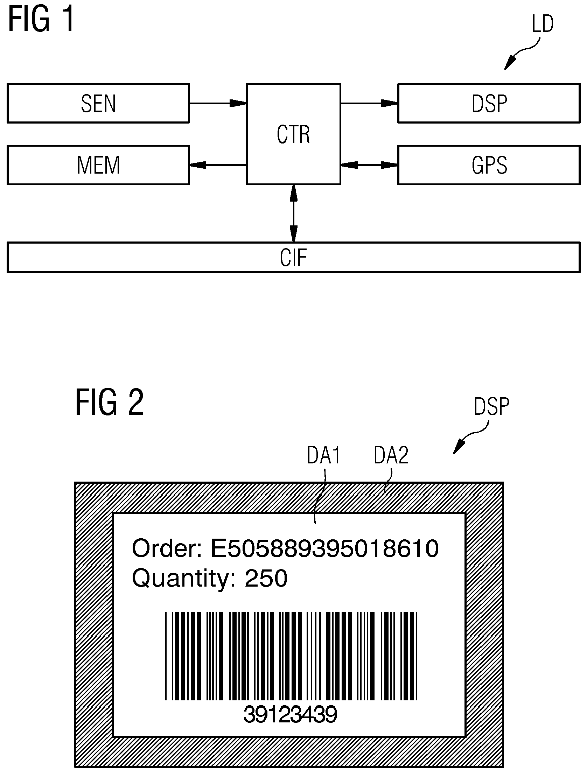

Referring to FIG. 1, a label device LD is shown. Hereinafter, the term »label device« means a device having a display operable as a means of identification and attached or affixed to an object in order to designate its origin, owner, manufacturer, contents or ingredients, use, etc.

The term »label« is used in the common sense to mean a device that is distinguishable from the product to which it is affixed and not a typical or inherent feature of the product. For example, a computer monitor and a display for a consumer electronic device (e.g., watch, cell phone, camera, etc.) are not considered to be labels since the displays are inherent product features.

The label device LD includes a control unit CTR, memory MEM, display DSP, a wireless interface CIF, and a - not shown - battery to provide power for the label device LD.

The control unit CTR controls the overall operation of the label device LD according to program instructions stored in memory MEM and may comprises one or more digital processing devices, such as microprocessors, microcontrollers, hardware, firmware, or a combination thereof. Memory MEM stores program instructions and data needed for operation.

The display DSP may comprise a liquid crystal display (LCD) an organic light emitting diode (OLED), electronic paper or electronic ink display. Electronic ink display technology provides a thin and low-energy display to enable users to view information.

The wireless interface CIF may comprise a short-range wireless interface, such as a Bluetooth interface or WiFi interface, a long range cellular phone or satellite communications interface. There may be more than one wireless interface CIF.

A location sensor GPS is used to detect location, distance or proximity of the label device LD. The locations sensor GPS may comprise a Global Positioning System or GPS receiver or other location detectors, particularly capable of indoor-navigation, in order to determine location and history of locations.

The label device LD may include or receive input from one or more sensors SEN or detectors that sense environmental conditions such as temperature, pressure humidity and acceleration A negative acceleration may detect a shock imposed to the label device LD and the container. Sensors SEN may also sense characteristics of a collection of materials, such as size, volume, weight of the materials, or chemical changes in the materials. Sensors SEN may also be used to detect materials usage or tampering or tempering or removing the label device LD itself.

Embodiments of the label device LD may additionally include one or more - not shown - user input devices. User input devices for the label device LD may comprise any known input device including buttons, keypads, etc. A display DSP configured as touch screen display could also be used for user input.

According to an embodiment, a label device LD is facilitated by a - not shown - portable device and a - not shown - remote device, particularly server, both connected with the label device LD over a common interface or network.

The portable device is configured to acquiring information displayed by the label device LD. The server is configured for transceiving data with the portable device and the label device LD. The server is preferably arranged for amending the data regarding the state and/or the location of the label device upon acquiring visible or invisible information by the portable device.

The label device LD may produce a barcode by receiving the underlying barcode data - e.g. text or numbers - from a server in order to enable the label device LD to compute the graphical information of the barcode. After this step of computing, the label device LD reports a successful execution back to server. Subsequently, upon scanning this barcode by the portable device, the portable device also reports a successful execution of scanning back to server. A look-up of reports on the server allows for an effective knowledge when a label device LD has been scanned.

Alternatively, the label device could produce a unique but random code which is mapped by a code mapped to the random code on the part of the server. With each registered scan, the server instructs the label device LD to compute a new bar code so that each bar code can only be scanned a single time.

Applying an embodiment of the label device LD in which one or more user input devices are included, e.g. a button or touch-sensitive display DSP, the label device LD advantageously provides a reset routine. Upon reset, the label device LD de-registers from its assigned server. A de-registered label device LD then presents a default barcode that uniquely identifies said label device LD by a unique identification number or, alternatively, other identification data including a network address. This embodiment allows for an easy configuration of the label device LD by scanning the barcode - depicting its unique identification number - by the portable device and using the server for a look-up of the identification number of the particular label device LD.

A typical user configuration procedure would include scanning the barcode of the label device LD itself followed by a scan of one or more other barcodes in the vicinity of the label device LD in order to provide a local context of the label device LD.

The other barcodes - which can be statically fixed to an object or, alternatively, displayed by other label devices LD - may be provided on the movable container, on a shelf hosting the container or on other mobile or immobile points of interest whereby the position of such points of interest is known by the server. The server is then able to configure the label device LD with respect to its actual position. This local configuration can of course be supported or replaced by a location sensor as part of the label device LD.

In general, the wireless interface CIF of the label device LD transceives data regarding the state and/or the location of the collection of materials, which may be contained in a container to which the label device is affixed.

Referring now to FIG. 2 which shows a front view of an exemplary label device LD. In the front view of the label device LD the display DSP is predominantly presented. The display DSP includes a first display area DA1 surrounded by a second display area DA2 in a frame-shaped manner. Whereas the first display area DA1 is suitable of presenting content of any kind, including text, graphics, logos and machine-readable code, the second display area DA2 is used for displaying an attention level.

In the example presented by figure 2, the first display area DA1 depicts an order number and a quantity, both in textual signs. Further on, a bar code is depicted accompanied with a number below, presenting a human-readable content of the bar code.

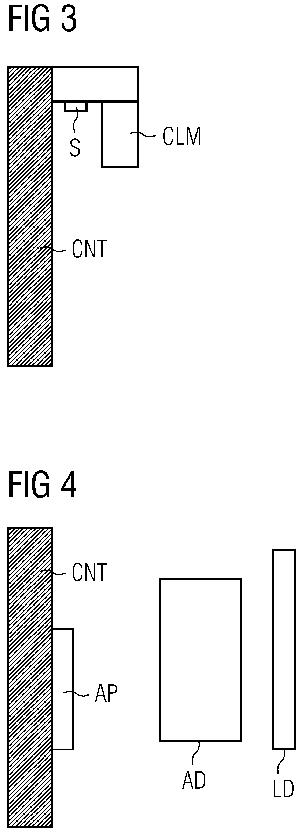

FIG. 3 and FIG. 4 show a schematic drawing of a mechanical supporting or fastening arrangement according to alternative embodiments. The FIGs show a surface of a container CNT along with supporting elements including a clamp CLM, an attachment plate AP, an adapter plate AD. The container CNT is accommodating the - not shown - collection of materials.

In general, any suitable method of attaching the label device LD to the container CNT may be used. For example, the label device LD may be secured to the container CNT by adhesives, by magnets, by stitching, by welding, or by mechanical fasteners such as hooks, screws, buckles, zippers, snaps, or pins.

FIG. 3 shows an embodiment, in which the - not shown - label device LD could be designed as a cartridge which is snapped into the clamp CLM of the container CNT and released by a - not shown - mechanism. The label device LD may also be suspended from or secured to the container by means of a - not shown - hanger that passes through an opening of a casing.

A sensor device S is assigned to the clamp CLM. The sensor device S is capable of determining data regarding a tampering or removal of the label device LD, and for transceiving said data by a - not shown - wireless interface of the sensor device S.

FIG. 4 shows an embodiment, in which the label device LD is fixed by mechanical fasteners of an attachment plate AP. In order to adapt to various mechanical fastening variants, an adapter plate AP may be used. A sensor device according to the sensor device S known form FIG 3 may be arranged in the interior of the attachment plate AP which is again capable of detecting a presence of the label device LD and thus detecting and communicating a tampering or removal of the label device LD.

The invention provides advantages as follows:
- Information displayed by label devices according to the embodiments can be arbitrarily defined and amended at any time. Thus, a static order scheme for data presentation is advantageously void;
- Containers identified by label devices according to the embodiments can be placed freely in a shelf since they report their position as needed;
- A remote device according to the embodiments, which is organized as a workflow system, is able to personalize the labels to particular operators, i.e. show what an operator actually needs to know now and not only information of a generic kind. A particular advantage arises by using the invention in industrial or manufacturing logistics;
- Containers can be traced using various location technologies;
- The display presentation of a label device according to the embodiments may advantageously indicate good or bad states, especially for a case when the container along with the label device has been exposed to a severe shock due to dropping the container. In such cases the second display area can turn red and textual information of the first display area can be adapted to summarize the incident.
- The display presentation of label devices according to the embodiments may advantageously indicate an incident by which the temperature has exceeded predefined thresholds.

## Claims

1. A label device for presenting information related to a transportable collection of materials, said label device (LD) comprising:
a wireless interface (CIF) for transceiving data regarding a state and/or a location of said collection of materials, for receiving data corresponding to information to be displayed by the label device (LD);
a control unit (CTR) for defining said information to be displayed;
a display (DSP) for displaying said information.

2. The label device according to claim 1, wherein the display (DSP) includes a first pixel-addressable display area (DA1).

3. The label device according to claim 2, wherein the first display area (DA1) comprises electronic ink disposed on a support.

4. The label device according to one of the aforementioned claims, wherein the display (DSP) includes a second display area (DA2) for displaying an attention level.

5. The label device according to one of the aforementioned claims 2 to 4, wherein the first display area (DA1) is surrounded by the second display area (DA2) in a frame-shaped manner.

6. The label device according to one of the aforementioned claims, including at least one sensor for determining spatial coordinates of the label device (LD).

7. The label device according to one of the aforementioned claims, including at least one sensor for determining a tampering or removal of the label device (LD).

8. The label device according to one of the aforementioned claims, including at least one sensor (SEN) sensing environmental conditions.

9. The label device according to one of the aforementioned claims, said environment parameters including at least one of
- a temperature;
- a pressure;
- a humidity; and;
- an acceleration.

10. The label device according to one of the aforementioned claims, the information to be displayed including at least one optical machine-readable code.

11. The label device according to claim 10, the optical machine-readable code being a barcode or a matrix code.

12. An arrangement including:
- a container (CNT) for accommodating a collection of materials;
- a supporting element on a surface of the container (CNT) for retaining at least one label device (LD) according to one of the aforementioned claims; and;
- a sensor device assigned to the supporting element for determining data, at least regarding a tampering or removal of the label device (LD), and for transceiving said data by a wireless interface of the sensor device.

13. An arrangement including
- at least one label device (LD) according to one of the aforementioned claims;
- at least one portable device for acquiring said information to be displayed by said label device (LD);
- at least one remote device for transceiving data with the portable device and the label device (LD), the remote device arranged for amending said data regarding a state and/or a location of said label device (LD) upon acquiring said information by said portable device.

14. Arrangement according to claim 13, the portable device including an optical reader for reading said information displayed by said display.

15. Arrangement according to one of the claims 13 and 14, the portable device including a near field communication transceiver for transceiving information with the wireless interface (CIF) of the label device (LD).
